# EUROPEAN PATENT SPECIFICATION

(11) **EP 3 294 038 B1**
(45) Date of publication and mention of the grant of the patent: **24.02.2021**
(21) Application number: 15893638.5
(22) Date of filing: 29.05.2015
(51) Int. Cl.: H04W 72/08, H04W 84/04

(54) **LTE INBAND RELAY METHOD AND DEVICE**
LTE-INBAND-RELAISVERFAHREN UND -VORRICHTUNG
PROCÉDÉ ET DISPOSITIF DE RELAIS INTRABANDE LTE

(43) Date of publication of application: 14.03.2018
(73) Proprietor: Huawei Technologies Co., Ltd., Longgang District Shenzhen, Guangdong 518129 (CN)
(72) Inventor: PENG, Xiang, Shenzhen Guangdong 518129 (CN)
(74) Representative: Maiwald Patent- und Rechtsanwaltsgesellschaft mbH
(86) International application number: PCT/CN2015/080389
(87) International publication number: WO 2016/191975

(56) References cited:
- CN-A- 102 013 961
- CN-A- 102 082 642
- CN-A- 102 217 212
- CN-A- 103 338 520
- CN-A- 103 814 532
- US-A1- 2010 316 096
- US-A1- 2012 039 243
- VODAFONE: "Public Safety UE to Network Relays", 3GPP DRAFT; S2-133039 REV 3022 RELAY ARC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Valencia, Spain; 20130715 - 20130719 19 July 2013 (2013-07-19), XP050726384, Retrieved from the Internet: URL:http://www.3gpp.org/ftp/tsg_sa/WG2_Arc h/TSGS2_98_Valencia/Docs/ [retrieved on 2013-07-19]
- INTERDIGITAL: "FDD Relay Type I Backhaul interference and HARQ issues", 3GPP DRAFT; R2-094025, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090701, 1 July 2009 (2009-07-01), XP050352192, [retrieved on 2009-07-01]

## Description

### TECHNICAL FIELD

The present invention relates to the field of mobile communications technologies, and in particular, to a Long Term Evolution technology (English: Long Term Evolution, LTE for short) in-band relay method, apparatus, and system.

### BACKGROUND

US 2010/316096 A1 describes methods and devices for implementing a relay node for avoiding a collision. A collision according to the therein described methods and devices may be avoided by allocating a first set of subframes to a backhaul link transmission, and allocating a second set of subframes to an access link transmission.

US 2012/039243 A1 describes a base station transmits a transmission indication on the downlink of a interface. Only when the base station receives an ACKnowledgment signal in response to the transmission indication from the relay node, the base station transmits an interface downlink signal to the relay node in a specific time area. The time area allocated by the transmission indication may be a time area added to a statically allocated time area.

As mobile communications technologies constantly develop, spectrum resources have already become rather scarce. According to an existing solution for allocating a spectrum resource, most remaining spectrum resources are located in relatively high frequency bands. For a spectrum resource in a high frequency band, both path loss and penetration loss are relatively great, and it is rather difficult to implement desirable coverage. A relay technology (English: Relay) can desirably resolve the coverage problem of a high frequency band.

A Relay network defined in an R10 standard of the Third Generation Partnership Project (English: 3rd Generation Partnership Project, 3GPP for short) includes two logical nodes: a donor eNodeB (English: Donor eNodeB, DeNB for short) and a relay node (English: Relay Node, RN for short). Based on a common base station (English: eNodeB, eNB for short), the DeNB additionally supports a function related to a Relay feature, and the DeNB also supports access to the RN while accessing common user equipment (English: User Equipment, UE for short), and carries backhaul traffic of the RN. The RN is logically classified into two parts: relay user equipment RN-UE and a relay base station RN-eNB, where the RN-eNB includes complete functions of a standard eNB and a Relay enhanced function, and the RN-eNB can be accessed by common UE that is within a coverage area of the RN-eNB, and establish an access link with the common UE; and the RN-UE includes some functions of standard UE and a Relay enhanced function, and the RN-UE accesses the DeNB, and establishes an LTE air interface bearer to provide a backhaul link for the RN-eNB. If a same frequency band is used for a backhaul link and an access link of the RN, relay is referred to as in-band Relay; and if different frequency bands are used for a backhaul link and an access link of the RN, relay is referred to as out-of-band Relay.

Obviously, total spectrum occupied by a backhaul link and an access link of in-band Relay are less than those of out-of-band Relay, that is, spectral efficiency is higher than that of out-of-band Relay. However, for in-band Relay, a problem of interference between a backhaul link and an access link needs to be resolved. The 3GPP R10 standard defines a manner of time division multiplexing (English: Time Division Multiplexing, TDM for short) to avoid interference between a backhaul link and an access link of in-band Relay. Specifically, a working mode of time division half-duplex is used. In a downlink direction, only one of the following two actions happens at a same time: The RN-UE receives data of the DeNB, and the RN-eNB sends data to common UE served by the RN-eNB. In an uplink direction, only one of the following two actions happens at a same time: The RN-UE sends data to the DeNB, and the RN-eNB receives data of common UE.

However, in the working mode of time division half-duplex, if a downlink backhaul link works (the RN-UE receives the data of the DeNB), the RN-eNB cannot send data to the common UE served by the RN-eNB, that is, the RN-eNB completely cannot send a physical downlink control channel (English: Physical Downlink Control Channel, PDCCH for short); therefore, the common UE belonging to the RN-eNB receives no PDCCH, and may fail to work normally. In view of this, a 3GPP standard defines a multimedia broadcast multicast service single frequency network (English: Multimedia Broadcast multicast service Single Frequency Network, MBSFN for short) subframe. In first three symbols of the subframe, the DeNB and the RN-eNB simultaneously send PDCCHs of the DeNB and the RN-eNB, and common UEs that camp on the DeNB and the RN-eNB separately receive the PDCCHs sent by the DeNB and the RN-eNB. The DeNB uses remaining 11 symbols to send data to the RN-UE, and the RN-eNB turns off transmit power within the time.

Because the RN-eNB needs to turn off transmit power in the last 11 symbols of the MBSFN subframe, hardware of the existing RN-eNB needs to be modified to support the function, thereby increasing costs. In addition, some old LTE terminals do not support the MBSFN subframe, and as a result, normal communication cannot be performed.

### SUMMARY

Various aspects of the present invention have been defined in the independent claims. Further technical features of each of these aspects have been defined in the respective dependent claims.

To resolve problems in the prior art such as that a hardware device does not support an MBSFN subframe, the aspects of the present invention provide an LTE in-band relay method and apparatus. The technical solutions are as follows:

A first aspect of the present invention provides an LTE in-band relay method, where the method includes:
receiving, by a first relay node, allocation information that is sent by a donor eNodeB, where the allocation information is used to indicate a first radio bearer resource that is to be occupied by a first backhaul link in a scheduling period, and the first backhaul link is a link between the first relay node and the donor eNodeB; and
communicating, by the first relay node, with first user equipment in the scheduling period by using a second radio bearer resource, where the first user equipment is user equipment to which the first relay node provides a service, and the second radio bearer resource is a radio bearer resource that is in a preset frequency band and that is different from the first radio bearer resource.

In an implementation manner of the first aspect of the present invention, the receiving, by a first relay node, allocation information that is sent by a donor eNodeB includes:
receiving, by the first relay node by using a relay physical downlink control channel, the allocation information that is sent by the donor eNodeB, where a radio bearer resource occupied by the relay physical downlink control channel is a part of radio bearer resources in the preset frequency band.

In another implementation manner of the first aspect of the present invention, the radio bearer resource occupied by the relay physical downlink control channel is radio bearer resources that are at two ends of the preset frequency band.

In another implementation manner of the first aspect of the present invention, the allocation information is specifically used to indicate the first radio bearer resource that is to be occupied by the first backhaul link in a scheduling period that is after a preset delay time.

In another implementation manner of the first aspect of the present invention, the preset delay time is greater than or equal to 1 millisecond, and the preset delay time is less than or equal to 8 milliseconds.

In another implementation manner of the first aspect of the present invention, the first relay node includes a relay base station and relay user equipment, and the relay base station and the relay user equipment are connected by using a communications interface.

In another implementation manner of the first aspect of the present invention, the receiving, by a first relay node, allocation information that is sent by a donor eNodeB includes:
receiving, by the relay user equipment, the allocation information that is sent by the donor eNodeB, and sending the allocation information to the relay base station;
   and
the communicating with first user equipment in the scheduling period by using a second radio bearer resource includes:
   communicating, by the relay base station, with the first user equipment in the scheduling period by using the second radio bearer resource.

In another implementation manner of the first aspect of the present invention, the allocation information is further used to indicate a third radio bearer resource that is to be occupied by at least one second backhaul link in the scheduling period, the second backhaul link is a link between a second relay node and the donor eNodeB, the second relay node is another relay node, which accesses the donor eNodeB, except the first relay node, and the second radio bearer resource is different from the third radio bearer resource.

A second aspect of the present invention further provides an LTE in-band relay method, where the method includes:
allocating, by a donor eNodeB to a first backhaul link, a first radio bearer resource that is in a preset frequency band and that is to be occupied in a scheduling period, where the first backhaul link is a link between the donor eNodeB and a first relay node that accesses the donor eNodeB; and
sending, by the donor eNodeB, allocation information to the first relay node, where the allocation information is used to indicate the first radio bearer resource that is to be occupied by the first backhaul link in the scheduling period.

In an implementation manner of the second aspect of the present invention, the allocating, by a donor eNodeB to a first backhaul link, a first radio bearer resource that is in a preset frequency band and that is to be occupied in a scheduling period includes:
periodically allocating, by the donor eNodeB to the first backhaul link according to at least one of a data volume and a priority of a service on the first backhaul link, the first radio bearer resource that is to be occupied in a scheduling period that is after a preset delay time.

In another implementation manner of the second aspect embodiment of the present invention, the sending allocation information to the first relay node includes:
sending, by using a relay physical downlink control channel, the allocation information to the first relay node, where a radio bearer resource occupied by the relay physical downlink control channel is a part of radio bearer resources in the preset frequency band.

In another implementation manner of the second aspect of the present invention, the radio bearer resource occupied by the relay physical downlink control channel is radio bearer resources that are at two ends of the preset frequency band.

In another implementation manner of the second aspect of the present invention, the allocation information is further used to indicate a third radio bearer resource that is to be occupied by at least one second backhaul link in the scheduling period, the second backhaul link is a link between the donor eNodeB and a second relay node, and the second relay node is another relay node, which accesses the donor eNodeB, except the first relay node.

A third aspect of the present invention further provides an LTE in-band relay apparatus, where the apparatus includes:
a receiving module, configured to receive allocation information that is sent by a donor eNodeB, where the allocation information is used to indicate a first radio bearer resource that is to be occupied by a first backhaul link in a scheduling period, and the first backhaul link is a link between the first relay node and the donor eNodeB; and
a scheduling module, configured to communicate with first user equipment in the scheduling period by using a second radio bearer resource, where the first user equipment is user equipment to which the first relay node provides a service, and the second radio bearer resource is a radio bearer resource that is in a preset frequency band and that is different from the first radio bearer resource.

In an implementation manner of the third aspect of the present invention, the receiving module is specifically configured to:
receive, by using a relay physical downlink control channel, the allocation information that is sent by the donor eNodeB, where a radio bearer resource occupied by the relay physical downlink control channel is a part of radio bearer resources in the preset frequency band.

In another implementation manner of the third aspect of the present invention, the radio bearer resource occupied by the relay physical downlink control channel is radio bearer resources that are at two ends of the preset frequency band.

In another implementation manner of the third aspect of the present invention, the allocation information is specifically used to indicate the first radio bearer resource that is to be occupied by the first backhaul link in a scheduling period that is after a preset delay time.

In another implementation manner of the third aspect of the present invention, the preset delay time is greater than or equal to 1 millisecond, and the preset delay time is less than or equal to 8 milliseconds.

In another implementation manner of the third aspect of the present invention, the LTE in-band relay apparatus is the first relay node, the first relay node includes a relay base station and relay user equipment, the relay base station and the relay user equipment are connected by using a communications interface, the relay user equipment includes the receiving module, and the relay base station includes the scheduling module.

In another implementation manner of the third aspect of the present invention, the relay user equipment is configured to receive the allocation information that is sent by the donor eNodeB, and send the allocation information to the relay base station; and
the relay base station is configured to communicate with the first user equipment in the scheduling period by using the second radio bearer resource.

In another implementation manner of the third aspect of the present invention, the allocation information is further used to indicate a third radio bearer resource that is to be occupied by at least one second backhaul link in the scheduling period, the second backhaul link is a link between a second relay node and the donor eNodeB, the second relay node is another relay node, which accesses the donor eNodeB, except the first relay node, and the second radio bearer resource is different from the third radio bearer resource.

A fourth aspect of the present invention provides an LTE in-band relay apparatus, where the apparatus includes:
an allocation module, configured to allocate, to a first backhaul link, a first radio bearer resource that is in a preset frequency band and that is to be occupied in a scheduling period, where the first backhaul link is a link between a donor eNodeB and a first relay node that accesses the donor eNodeB; and
a sending module, configured to send allocation information to the first relay node, where the allocation information is used to indicate the first radio bearer resource that is to be occupied by the first backhaul link in the scheduling period.

In an implementation manner of the fourth aspect of the present invention, the allocation module is specifically configured to:
periodically allocate, to the first backhaul link according to at least one of a data volume and a priority of a service on the first backhaul link, the first radio bearer resource that is to be occupied in a scheduling period that is after a preset delay time.

In another implementation manner of the fourth aspect of the present invention, the sending module is specifically configured to:
send, by using a relay physical downlink control channel, the allocation information to the first relay node, where a radio bearer resource occupied by the relay physical downlink control channel is a part of radio bearer resources in the preset frequency band.

In another implementation manner of the fourth aspect of the present invention, the radio bearer resource occupied by the relay physical downlink control channel is radio bearer resources that are at two ends of the preset frequency band.

In another implementation manner of the fourth aspect of the present invention, the allocation information is further used to indicate a third radio bearer resource that is to be occupied by at least one second backhaul link in the scheduling period, the second backhaul link is a link between the donor eNodeB and a second relay node, and the second relay node is another relay node, which accesses the donor eNodeB, except the first relay node.

A fifth aspect of the present invention further provides an LTE in-band relay apparatus, where the apparatus includes at least one processor, at least one memory, a first transceiver, a second transceiver, and a bus system, where the at least one processor, the at least one memory, the first transceiver, and the second transceiver communicate with each other by using the bus system, the at least one memory is configured to store a computer execution instruction, and when the apparatus runs, the at least one processor executes the computer execution instruction stored in the memory, and is specifically configured to:
control the first transceiver to receive allocation information that is sent by a donor eNodeB, where the allocation information is used to indicate a first radio bearer resource that is to be occupied by a first backhaul link in a scheduling period, and the first backhaul link is a link between a first relay node and the donor eNodeB; and
control the second transceiver to communicate with first user equipment in the scheduling period by using a second radio bearer resource, where the first user equipment is user equipment to which the first relay node provides a service, and the second radio bearer resource is a radio bearer resource that is in a preset frequency band and that is different from the first radio bearer resource.

In an implementation manner of the fifth aspect of the present invention, the at least one processor is specifically configured to:
control the first transceiver to receive, by using a relay physical downlink control channel, the allocation information that is sent by the donor eNodeB, where a radio bearer resource occupied by the relay physical downlink control channel is a part of radio bearer resources in the preset frequency band.

In another implementation manner of the fifth aspect of the present invention, the radio bearer resource occupied by the relay physical downlink control channel is radio bearer resources that are at two ends of the preset frequency band.

In another implementation manner of the fifth aspect of the present invention, the allocation information is specifically used to indicate the first radio bearer resource that is to be occupied by the first backhaul link in a scheduling period that is after a preset delay time.

In another implementation manner of the embodiment of the present invention, the preset delay time is greater than or equal to 1 millisecond, and the preset delay time is less than or equal to 8 milliseconds.

In another implementation manner of the fifth aspect of the present invention, the at least one processor includes at least one first processor and at least one second processor, the at least one memory includes a first memory and a second memory, and the bus system includes a first bus and a second bus, where
the apparatus includes a relay base station and relay user equipment, where the relay base station includes the first processor, the first memory, the first transceiver, the first bus, and a first communications interface, and the first processor, the first memory, the first transceiver, and the first communications interface communicate with each other by using the first bus; and the relay user equipment includes the second processor, the second memory, the second transceiver, the second bus, and a second communications interface, the second processor, the second memory, the second transceiver, and the second communications interface communicate with each other by using the second bus, and the first communications interface and the second communications interface are connected to each other;
the at least one first processor is configured to control the first transceiver to receive the allocation information that is sent by the donor eNodeB; and the at least one second processor is configured to control the second transceiver to communicate with the first user equipment in the scheduling period by using the second radio bearer resource.

In another implementation manner of the fifth aspect of the present invention, the second processor is specifically configured to control the second communications interface to send, by using the first communications interface, the allocation information to the relay base station.

In another implementation manner of the fifth aspect of the present invention, the allocation

information is further used to indicate a third radio bearer resource that is to be occupied by at least one second backhaul link in the scheduling period, the second backhaul link is a link between a second relay node and the donor eNodeB, the second relay node is another relay node, which accesses the donor eNodeB, except the first relay node, and the second radio bearer resource is different from the third radio bearer resource.

A sixth aspect of the present invention provides an LTE in-band relay apparatus, where the apparatus includes at least one processor, a memory, a transceiver, and a bus system, where the at least one processor, the memory, and the transceiver communicate with each other by using the bus system, the memory is configured to store a computer execution instruction, and when the apparatus runs, the at least one processor executes the computer execution instruction stored in the memory, and is specifically configured to:
allocate, to a first backhaul link, a first radio bearer resource that is in a preset frequency band and that is to be occupied in a scheduling period, where the first backhaul link is a link between a donor eNodeB and a first relay node that accesses the donor eNodeB; and
control the transceiver to send allocation information to the first relay node, where the allocation information is used to indicate the first radio bearer resource that is to be occupied by the first backhaul link in the scheduling period.

In an implementation manner of the sixth aspect of the present invention, the at least one processor is specifically configured to:
periodically allocate, to the first backhaul link according to at least one of a data volume and a priority of a service on the first backhaul link, the first radio bearer resource that is to be occupied in a scheduling period that is after a preset delay time.

In another implementation manner of the sixth aspect of the present invention, the at least one processor is specifically configured to:
control the transceiver to send, by using a relay physical downlink control channel, the allocation information to the first relay node, where a radio bearer resource occupied by the relay physical downlink control channel is a part of radio bearer resources in the preset frequency band.

In another implementation manner of the sixth aspect of the present invention, the radio bearer resource occupied by the relay physical downlink control channel is radio bearer resources that are at two ends of the preset frequency band.

In another implementation manner of the sixth aspect of the present invention, the allocation information is further used to indicate a third radio bearer resource that is to be occupied by at least one second backhaul link in the scheduling period, the second backhaul link is a link between the donor eNodeB and a second relay node, and the second relay node is another relay node, which accesses the donor eNodeB, except the first relay node.

A seventh aspect of the present invention further provides a storage medium, configured to store one or more computer programs, where the one or more computer programs include program code, and when the computer programs run, the program code is used to execute the foregoing LTE in-band relay method.

An eighth aspect of the present invention further provides a storage medium, configured to store one or more computer programs, where the one or more computer programs include program code, and when the computer programs run, the program code is used to execute the foregoing LTE in-band relay method.

A ninth aspect of the present invention further provides an LTE in-band relay system, where the system includes:
a donor eNodeB, configured to allocate, to a first backhaul link, a first radio bearer resource that is in a preset frequency band and that is to be occupied in a scheduling period, where the first backhaul link is a link between the donor eNodeB and a first relay node that accesses the donor eNodeB; and send allocation information to the first relay node, where the allocation information is used to indicate the first radio bearer resource that is to be occupied by the first backhaul link in the scheduling period; and
the first relay node, configured to receive the allocation information that is sent by the donor eNodeB, and communicate with first user equipment in the scheduling period by using a second radio bearer resource, where the first user equipment is user equipment to which the first relay node provides a service, and the second radio bearer resource is a radio bearer resource that is in the preset frequency band and that is different from the first radio bearer resource.

In an implementation manner of the ninth aspect of the present invention, the first relay node is specifically configured to:
receive, by using a relay physical downlink control channel, the allocation information that is sent by the donor eNodeB, where a radio bearer resource occupied by the relay physical downlink control channel is a part of radio bearer resources in the preset frequency band.

In another implementation manner of the ninth aspect of the present invention, the radio bearer resource occupied by the relay physical downlink control channel is radio bearer resources that are at two ends of the preset frequency band.

In another implementation manner of the ninth aspect of the present invention, the allocation information is specifically used to indicate the first radio bearer resource that is to be occupied by the first backhaul link in a scheduling period that is after a preset delay time. The technical solutions provided in the aspects of the present invention bring in the following beneficial effects:
A first relay node receives allocation information that is sent by a donor eNodeB, and communicates with first user equipment in a scheduling period by using a second radio bearer resource, where the allocation information is used to indicate a first radio bearer resource that is to be occupied by a first backhaul link in a scheduling period, the first backhaul link is a link between the donor eNodeB and the first relay node, and the second radio bearer resource is a radio bearer resource that is in a first frequency band and that is different from the first radio bearer resource. In this way, different radio bearer resources are separately used to transmit data on an access link and a backhaul link of the first relay node. Therefore, the access link and the backhaul link may be simultaneously used while no interference is caused. In addition, an MBSFN subframe no longer needs to be used to perform transmission, and relay user equipment does not need to be modified, thereby reducing costs, and resolving a device compatibility problem to a great extent.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of common skill in the art may still derive other drawings from these accompanying drawings without creative efforts.
FIG. 1 shows an application scenario according to an embodiment of the present invention;
FIG. 2 is a flowchart of an LTE in-band relay method according to an embodiment of the present invention;
FIG. 3 is a flowchart of an LTE in-band relay method according to an embodiment of the present invention;
FIG. 4 is a schematic structural diagram of a subframe according to an embodiment of the present invention;
FIG. 5 is a schematic diagram of use of an RB resource according to an embodiment of the present invention;
FIG. 6 is a flowchart of an LTE in-band relay method according to an embodiment of the present invention;
FIG. 7 is a flowchart of an LTE in-band relay method according to an embodiment of the present invention;
FIG. 8 is a flowchart of an LTE in-band relay method according to an embodiment of the present invention;
FIG. 9 is a schematic structural diagram of an LTE in-band relay apparatus according to an embodiment of the present invention;
FIG. 10 is a schematic structural diagram of a first RN according to an embodiment of the present invention;
FIG. 11 is a schematic structural diagram of another first RN according to an embodiment of the present invention;
FIG. 12 is a schematic structural diagram of an LTE in-band relay apparatus according to an embodiment of the present invention;
FIG. 13 is a schematic structural diagram of an LTE in-band relay apparatus according to an embodiment of the present invention;
FIG. 14 is a schematic structural diagram of an LTE in-band relay apparatus according to an embodiment of the present invention;
FIG. 15 is a schematic structural diagram of an LTE in-band relay apparatus according to an embodiment of the present invention; and
FIG. 16 is a schematic structural diagram of an LTE in-band relay system according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

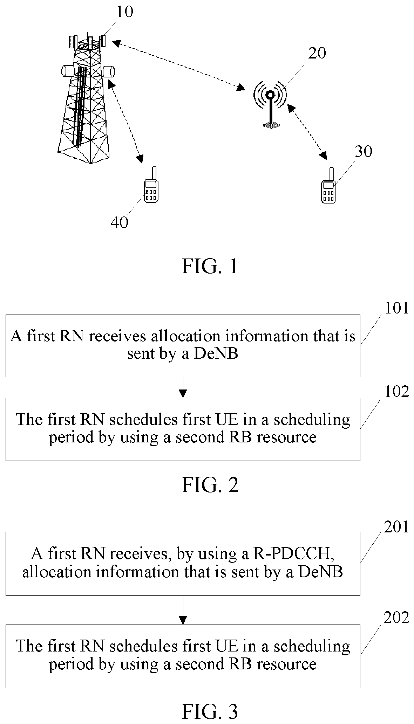

To facilitate description of the embodiments, the following first simply describes an application scenario in an embodiment of the present invention. Referring to FIG. 1, the scenario is a Relay network, which includes a DeNB 10, an RN 20, first UE 30 that accesses the RN 20, and second UE 40 that accesses the DeNB 10. The DeNB 10 also supports access by the RN 20 while supporting access by the second UE 40, and carries backhaul traffic of the RN 20. The RN 20 is logically classified into two parts: RN-UE and an RN-eNB, where the RN-eNB can be accessed by the first UE 30 that is within a coverage area of the RN-eNB, and establish an access link with the first UE 30; and the RN-UE accesses the DeNB 10, and establishes an LTE air interface bearer to provide a backhaul link for the RN-eNB.

Both the first UE 30 and the second UE 40 refer to terminal devices on a user side.

In this embodiment of the present invention, one DeNB 10 may be accessed by one or more RNs 20.

The devices and connection relationships in the foregoing application scenario are used only for exemplary purpose, and are not limited in this embodiment of the present invention.

FIG. 2 provides a flowchart of an LTE in-band relay method, where the method may be executed by an RN (that is, a first RN in the following) in a Relay network. Referring to FIG. 2, the method includes:
Step 101. A first RN receives allocation information that is sent by a DeNB, where the allocation information is used to indicate a first radio bearer (RB for short) resource that is to be occupied by a first backhaul link in a scheduling period, and the first backhaul link is a link between the first RN and the DeNB.

In this embodiment of the present invention, a length of the scheduling period may be 1 ms, that is, a length of a subframe. A subframe is defined by two aspects: a time domain and a frequency domain, where the time domain includes a symbol, and the frequency domain includes a radio bearer resource (that is, a subcarrier). Because the DeNB usually allocates a radio bearer resource to an accessed device (which includes an RN and UE) in each subframe, a length of a subframe is also used as a period of the radio bearer resource that is indicated by the allocation information and that is to be occupied by the first backhaul link.

Step 102. The first RN communicates with first UE in the scheduling period by using a second RB resource, where the first UE is UE to which the first RN provides a service, and the second RB resource is an RB resource that is in a preset frequency band and that is different from the first RB resource.

The communicating, by the first RN, with the first UE includes: establishing an access link with the first UE by using the second RB resource, and performing data transmission, or the like.

The preset frequency band refers to an operating frequency band of the DeNB, and for ease of reading, a first frequency band is used as a replacement in the following description.

In this embodiment of the present invention, the first backhaul link may occupy RB resources that are at two ends of the first frequency band, and may occupy one or more RB resources at each end; and the access link occupies an RB resource that is in the middle of the first frequency band.

In this embodiment of the present invention, a first RN receives allocation information that is sent by a DeNB, and communicates with first UE in a scheduling period by using a second RB resource, where the allocation information is used to indicate a first RB resource that is to be occupied by a first backhaul link in a scheduling period that is after a preset delay time, the first backhaul link is a link between the first RN and the DeNB, and the second RB resource is an RB resource that is in a first frequency band and that is different from the first RB resource. In this way, different RB resources are separately used to transmit data on an access link and a backhaul link of the first RN. Therefore, the access link and the backhaul link may be simultaneously used while no interference is caused. In addition, an MBSFN subframe no longer needs to be used to perform transmission, and an RN-eNB does not need to be modified, thereby reducing costs, and resolving a device compatibility problem to a great extent.

FIG. 3 provides a flowchart of an LTE in-band relay method, where the method may be executed by an RN (that is, a first RN) in a Relay network, and in the method, how to receive allocation information that is sent by a DeNB is specifically recorded. Referring to FIG. 3, the method includes:
Step 201. A first RN receives, by using a relay physical downlink control channel (English: Relay-PDCCH, R-PDCCH for short), allocation information that is sent by a DeNB, where the allocation information is used to indicate a first radio bearer (English: Radio Bear, RB for short) resource that is to be occupied by a first backhaul link in a scheduling period that is after a preset delay time, and the first backhaul link is a link between the first RN and the DeNB.

Specifically, because it takes a time for the DeNB to send the allocation information to the first RN, to ensure that the first RN can normally use the radio bearer resource that is indicated by the allocation information, the first radio bearer resource indicated by the allocation information is allocated to the first backhaul link after the preset delay time. The preset delay time may be set according to an actual case, for example, the preset delay time is greater than or equal to 1 millisecond, and the preset delay time is less than or equal to 8 milliseconds.

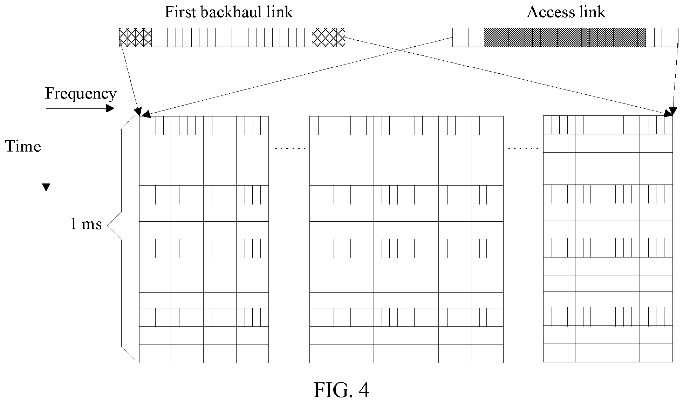

In this embodiment of the present invention, a length of a scheduling period may be 1 ms, that is, a length of a subframe. As shown in FIG. 4, a subframe is defined by two aspects: a time domain (a time) and a frequency domain (a frequency), where the time domain includes a symbol, and the frequency domain includes a radio bearer resource (that is, a subcarrier). Because the DeNB usually allocates a radio bearer resource to an accessed device (which includes an RN and UE) in each subframe, a length of a subframe is also used as a period of the radio bearer resource that is indicated by the allocation information and that is to be occupied by the first backhaul link.

In addition, as shown in FIG. 4, a transmission link between devices occupies one or more radio bearer resources in a frequency domain (a frequency band), for example, the first backhaul link occupies a radio bearer resource that is at two ends of a frequency domain shown in the figure, and an access link occupies a radio bearer resource that is in the middle of the frequency domain shown in the figure.

According to a Relay technology, a DeNB and an RN-eNB send control signaling to common accessed UE by using a PDCCH, and send data to the common UE by using a physical downlink shared channel (PDSCH for short). The DeNB sends control signaling to RN-UE by using an R-PDCCH, the foregoing allocation information may be included in the control signaling, and the control signaling sent to the RN-UE by the DeNB further includes content such as a modulation and coding scheme in addition to the allocation information.

RB resources occupied by an R-PDCCH and a PDCCH are independent from each other, but the R-PDCCH may occupy a part of RB resources of the PDSCH to perform transmission.

In another implementation manner of the present invention, a radio bearer resource occupied by an R-PDCCH is a part of radio bearer resources in the first frequency band, and is specifically a part of radio bearer resources in a symbol, except a symbol used by a PDCCH, in a subframe. For example, the first to third symbols in a subframe are used as a PDCCH, and one to two (or another quantity) RB resources in remaining symbols of the subframe are used as an R-PDCCH.

As a preferred implementation manner, an RB resource occupied by an R-PDCCH is RB resources that are at two ends of the first frequency band, and one or more RB resources may be occupied at each end. The allocation information is transmitted by means of modulation and coding by simultaneously using RB resources that are at two ends of a frequency band, thereby avoiding that when one RB resource is used to perform transmission, signal interference causes a data loss or error problem, and reducing impact of signal interference on transmission. During specific implementation, an R-PDCCH may occupy a same quantity of

RB resources at each of two ends of the first frequency band.

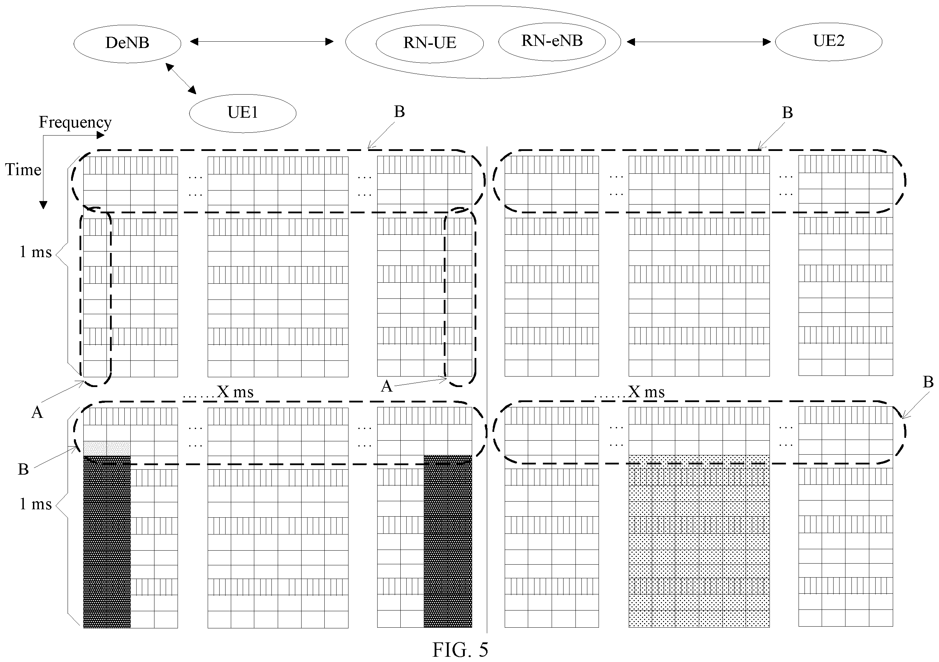

Specifically, as shown in FIG. 5, in first three symbols of a sub frame (RB resources in a B block in the figure), a DeNB sends control signaling to accessed UE1 (common UE) by using a PDCCH, and an RN-eNB sends control signaling to accessed UE2 (common UE) by using a PDCCH. In a subsequent symbol of the subframe, the DeNB sends allocation information to RN-UE by using RB resources that are at two ends of the frequency band (RB resources in an A block in the figure). In a subframe after X ms (that is, the foregoing preset delay time), the RN-eNB communicates with the UE2 by using an RB resource on a shadow part on the right side in the figure (the middle of the frequency band), and in the subframe, the first backhaul link occupies RB resources on two shadow parts on the left side in the figure (two ends of the frequency band).

Further, the allocation information is further used to indicate a third RB resource that is to be occupied by at least one second backhaul link in the scheduling period, the second backhaul link is a link between the DeNB and a second RN, the second RN is another RN, which accesses the DeNB, except the first RN, and the second RB resource is different from the third RB resource. In this way, it is avoided that the second backhaul link generates interference when the first RN communicates with UE that accesses the first RN.

Step 202. The first RN communicates with first UE in the scheduling period by using a second RB resource, where the first UE is UE to which the first RN provides a service, and the second RB resource is an RB resource that is in a first frequency band and that is different from the first RB resource.

The communicating, by the first RN, with the first UE includes: establishing an access link with the first UE by using the second RB resource, and performing data transmission, or the like.

In this embodiment of the present invention, the first backhaul link may occupy RB resources that are at two ends of the first frequency band, and may occupy one or more RB resources at each end; and an access link occupies an RB resource that is in the middle of the first frequency band. Specifically, as can be shown in FIG. 4, RB resources indicated by shadow parts at two ends of a frequency band may be used as the first backhaul link, and RB resources indicated by a shadow part in the middle of the frequency band may be used as the access link. During specific implementation, the first backhaul link may occupy a same quantity of RB resources that are at two ends of a frequency band, for example, four RB resources at each end shown in FIG. 4.

In this embodiment of the present invention, a first RN receives allocation information that is sent by a DeNB, and communicates with first UE in a scheduling period by using a second RB resource, where the allocation information is used to indicate a first RB resource that is to be occupied by a first backhaul link in a scheduling period that is after a preset delay time, the first backhaul link is a link between the first RN and the DeNB, and the second RB resource is an RB resource that is in a first frequency band and that is different from the first RB resource. In this way, different RB resources are separately used to transmit data on an access link and a backhaul link of the first RN. Therefore, the access link and the backhaul link may be simultaneously used while no interference is caused. In addition, an MBSFN subframe no longer needs to be used to perform transmission, and an RN-eNB does not need to be modified, thereby reducing costs, and resolving a device compatibility problem to a great extent.

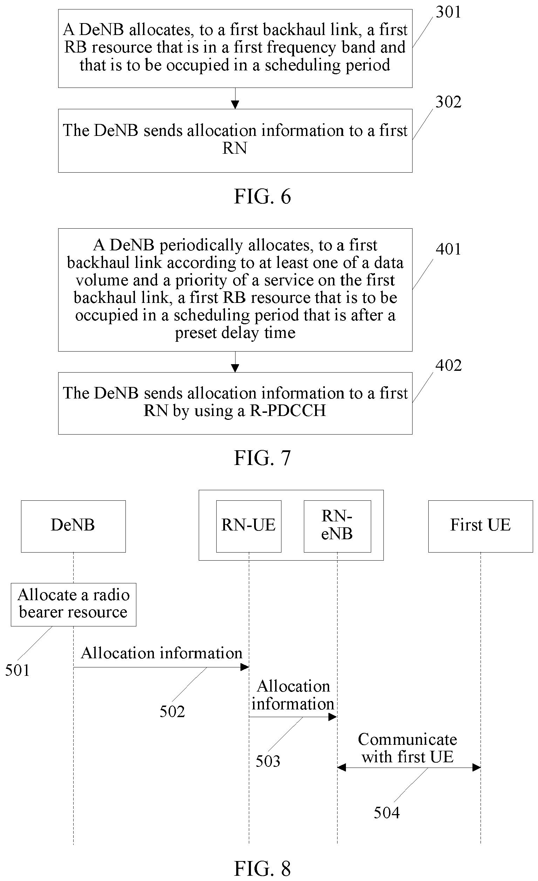

FIG. 6 provides a flowchart of an LTE in-band relay method, where the method may be executed by a DeNB in a Relay network. Referring to FIG. 6, the method includes:
Step 301. A DeNB allocates, to a first backhaul link, a first RB resource that is in a first frequency band and that is to be occupied in a scheduling period, where the first backhaul link is a link between the DeNB and a first RN that accesses the DeNB.

Specifically, because it takes a time for the DeNB to send allocation information to the first RN, to ensure that the first RN can normally use the radio bearer resource that is indicated by the allocation information, the first radio bearer resource indicated by the allocation information is allocated to the first backhaul link after a preset delay time.

In this embodiment of the present invention, a length of a scheduling period may be 1 ms, that is, a length of a subframe. A subframe is defined by two aspects: a time domain and a frequency domain, where the time domain includes a symbol, and the frequency domain includes a radio bearer resource (that is, a subcarrier). Because the DeNB usually allocates a radio bearer resource to an accessed device (which includes an RN and UE) in each subframe, a length of a subframe is also used as a period of the radio bearer resource that is indicated by the allocation information and that is to be occupied by the first backhaul link.

Step 302. The DeNB sends allocation information to the first RN, where the allocation information is used to indicate the first RB resource that is to be occupied by the first backhaul link in the scheduling period, so that the first RN communicates with first UE in the scheduling period by using a second RB resource, where the first UE is UE to which the first RN provides a service, and the second RB resource is an RB resource that is in the preset frequency band and that is different from the first RB resource.

In this embodiment of the present invention, a DeNB allocates, to a first backhaul link, a first RB resource that is to be occupied in a scheduling period, and sends allocation information to a first RN, where the allocation information is used to indicate the first RB resource that is to be occupied by the first backhaul link in a scheduling period that is after a preset delay time, so that the first RN communicates with first UE in the scheduling period by using a second RB resource, where the first UE is UE to which the first RN provides a service, and the second RB resource is an RB resource that is in a preset frequency band and that is different from the first RB resource. In this way, different RB resources are separately used to transmit data on an access link and a backhaul link of a relay node. Therefore, the access link and the backhaul link may be simultaneously used while no interference is caused. In addition, an MBSFN subframe no longer needs to be used to perform transmission, and an RN-eNB does not need to be modified, thereby reducing costs, and resolving a device compatibility problem to a great extent.

FIG. 7 provides a flowchart of an LTE in-band relay method, where the method may be executed by a DeNB in a Relay network, and in the method, how to allocate an RB resource and how to send allocation information are specifically recorded. Referring to FIG. 7, the method includes:
Step 401. A DeNB periodically allocates, to a first backhaul link according to at least one of a data volume and a priority of a service on the first backhaul link, a first RB resource that is to be occupied in a scheduling period that is after a preset delay time, where the first backhaul link is a link between the DeNB and a first RN that accesses the DeNB.

Specifically, the allocating the first RB resource to the first backhaul link according to the data volume and the priority of the service on the first backhaul link refers to comparing a data volume of to-be-transmitted data on the first backhaul link and a data volume of to-be-transmitted data on an access link, and/or comparing the priority of the service on the first backhaul link and the priority of the service on the access link, and performing allocation according to an existing RB allocation policy. For example, when the priority of the service on the first backhaul link is higher than a priority of a service on an access link that corresponds to second UE, an idle RB resource is preferentially allocated to the first backhaul link. The access link is a link between the DeNB and the second UE, and the second UE is UE to which the DeNB provides a service.

Further, in the foregoing allocation process, the DeNB periodically allocates, to the first backhaul link, an RB resource to be occupied in a scheduling period; therefore, the period herein is related to a length of the scheduling period, and the action of allocation is performed in real time. Compared with semi-static configuration implemented by using an MBSFN subframe in the prior art (that is, a length of the MBSFN subframe is fixed, and a symbol occupied to perform receiving and sending is also fixed), RB resource allocation in real time can be performed according to a service requirement, and can avoid resource waste caused by static allocation.

It is easily known that the foregoing RB resource allocation method is used only as an example, and does not constitute any limitation on the present invention.

Further, because it takes a time for the DeNB to send allocation information to the first RN, to ensure that the first RN can normally use the radio bearer resource that is indicated by the allocation information, the first radio bearer resource indicated by the allocation information is allocated to the first backhaul link after the preset delay time. The preset delay time is related to factors such as transmission delays between the DeNB and the RN-UE, and between the RN-UE and the RN-eNB, and the preset delay time may be set according to an actual case, for example, the preset delay time is greater than or equal to 1 millisecond, and the preset delay time is less than or equal to 8 milliseconds.

In this embodiment of the present invention, a length of a scheduling period may be 1 ms, that is, a length of a subframe. A subframe is defined by two aspects: a time domain and a frequency domain, where the time domain includes a symbol, and the frequency domain includes a radio bearer resource (that is, a subcarrier). Because the DeNB usually allocates a radio bearer resource to an accessed device (which includes an RN and UE) in each subframe, a length of a subframe is also used as a period of the radio bearer resource that is indicated by the allocation information and that is to be occupied by the first backhaul link.

Step 402. The DeNB sends allocation information to the first RN by using an R-PDCCH, where the allocation information is used to indicate the first RB resource that is to be occupied by the first backhaul link in the scheduling period, so that the first RN communicates with first UE in the scheduling period by using a second RB resource, where the first UE is UE to which the first RN provides a service, and the second RB resource is an RB resource that is in a preset frequency band and that is different from the first RB resource.

In another implementation manner of the present invention, a radio bearer resource occupied by an R-PDCCH is a part of radio bearer resources in the first frequency band, and is specifically a part of radio bearer resources in a symbol, except a symbol used by a PDCCH, in a subframe. For example, the first to third symbols in a subframe are used as a PDCCH, and one to two (or another quantity) RB resources in remaining symbols of the subframe are used as an R-PDCCH.

As a preferred implementation manner, an RB resource occupied by an R-PDCCH is RB resources that are at two ends of the first frequency band, and one or more RB resources may be occupied at each end. The allocation information is transmitted by means of modulation and coding by simultaneously using RB resources that are at two ends of a frequency band, thereby avoiding that when one RB resource is used to perform transmission, signal interference causes a data loss or error problem, and reducing impact of signal interference on transmission. During specific implementation, an R-PDCCH may occupy a same quantity of RB resources at each of two ends of the first frequency band.

Further, the allocation information is further used to indicate a third RB resource that is to be occupied by at least one second backhaul link in a scheduling period that is after a preset delay time, the second backhaul link is a link between the DeNB and a second RN, the second RN is another RN, which accesses the DeNB, except the first RN, and the second RB resource is different from the third RB resource. In this way, it is avoided that the second backhaul link generates interference when the first RN communicates with UE that accesses the first RN.

In this embodiment of the present invention, a DeNB allocates, to a first backhaul link, a first RB resource that is to be occupied in a scheduling period that is after a preset delay time, and sends allocation information to a first RN, where the allocation information is used to indicate the first RB resource that is to be occupied by the first backhaul link in a scheduling period that is after the preset delay time, so that the first RN communicates with first UE in the scheduling period by using a second RB resource, where the first UE is UE to which the first RN provides a service, and the second RB resource is an RB resource that is in a preset frequency band and that is different from the first RB resource. In this way, different RB resources are separately used to transmit data on an access link and a backhaul link of a relay node. Therefore, the access link and the backhaul link may be simultaneously used while no interference is caused. In addition, an MBSFN subframe no longer needs to be used to perform transmission, and an RN-eNB does not need to be modified, thereby reducing costs, and resolving a device compatibility problem to a great extent.

FIG. 8 provides a flowchart of an LTE in-band relay method, where the method may be jointly executed by a DeNB and an RN in a Relay network, in the method, the RN (that is, a first RN) includes two parts: an RN-eNB and RN-UE, and the RN-eNB and the RN-UE are connected. Referring to FIG. 8, the method includes:
Step 501. A DeNB allocates, to a first backhaul link, a first RB resource that is in a first frequency band and that is to be occupied in a scheduling period that is after a preset delay time, where the first backhaul link is a link between the DeNB and a first RN that accesses the DeNB.

Specifically, step 501 may include: periodically allocating, by the DeNB to the first backhaul link according to at least one of a data volume and a priority of a service on the first backhaul link, the first RB resource that is to be occupied in the scheduling period that is after the preset delay time. The allocating the first RB resource to the first backhaul link according to the data volume and the priority of the service on the first backhaul link refers to comparing a data volume of to-be-transmitted data on the first backhaul link and a data volume of to-be-transmitted data on an access link of the DeNB, and/or comparing the priority of the service on the first backhaul link and a priority of a service on an access link, and performing allocation according to an existing RB allocation policy. For example, when the priority of the service on the first backhaul link is higher than a priority of a service on an access link that corresponds to second UE, an idle RB resource is preferentially allocated to the first backhaul link. The access link is a link between the DeNB and the second UE, and first UE is UE to which the DeNB provides a service.

Further, in the foregoing allocation process, the DeNB may periodically allocate, to the first backhaul link, an RB resource to be occupied in a scheduling period; therefore, the period herein is related to a length of the scheduling period, and the action of allocation is performed in real time. Compared with semi-static configuration implemented by using an MBSFN subframe in the prior art (that is, a length of the MBSFN subframe is fixed, and a symbol occupied to perform receiving and sending is also fixed), RB resource allocation in real time can be performed according to a service requirement, and can avoid resource waste caused by static allocation.

In this embodiment of the present invention, because it takes a time for the DeNB to send allocation information to the first RN, to ensure that the first RN can normally use the radio bearer resource that is indicated by the allocation information, the first radio bearer resource indicated by the allocation information is allocated to the first backhaul link after the preset delay time. The preset delay time is related to factors such as transmission delays between the DeNB and the RN-UE, and between the RN-UE and the RN-eNB, and the preset delay time may be set according to an actual case, for example, the preset delay time is greater than or equal to 1 millisecond, and the preset delay time is less than or equal to 8 milliseconds.

In this embodiment of the present invention, a length of a scheduling period may be 1 ms, that is, a length of a subframe. A subframe is defined by two aspects: a time domain and a frequency domain, where the time domain includes a symbol, and the frequency domain includes a radio bearer resource (that is, a subcarrier). Because the DeNB usually allocates a radio bearer resource to an accessed device (which includes an RN and UE) in each subframe, a length of a subframe is also used as a period of the radio bearer resource that is indicated by the allocation information and that is to be occupied by the first backhaul link.

Step 502. The DeNB sends allocation information to the first RN, and RN-UE in the first RN receives the allocation information that is sent by the DeNB.

It is easily known that the allocation information may further carry a current time point and a time of a scheduling period.

Further, the allocation information is further used to indicate a third RB resource that is to be occupied by at least one second backhaul link in the scheduling period, the second backhaul link is a link between the DeNB and a second RN, and the second RN is another RN, which accesses the DeNB, except the first RN.

Specifically, the sending, by the DeNB, the allocation information to the first RN may include: sending the allocation information to the first RN by using an R-PDCCH.

Specifically, the receiving, by the RN-UE in the first RN, the allocation information that is sent by the DeNB may include: receiving, by the RN-UE in the first RN by using an R-PDCCH, the allocation information that is sent by the DeNB.

An RB resource occupied by an R-PDCCH is RB resources that are at two ends of the first frequency band, and one or more RB resources may be occupied at each end. The allocation information is transmitted by means of modulation and coding by simultaneously using RB resources that are at two ends of a frequency band, thereby avoiding that when one RB resource is used to perform transmission, signal interference causes a data loss or error problem, and reducing impact of signal interference on transmission.

Step 503. The RN-UE sends the allocation information to an RN-eNB in the first RN. Specifically, step 503 may include: the RN-UE sends the allocation information to the RN-eNB in the first RN by using a self-defined interface, where the self-defined interface includes, but is not limited to, a bus interface or a local area network interface.

During specific implementation, the RN-UE and the RN-eNB may be two independent devices, or may be two chips in a same IT container, or may be two modules in one chip. The RN-UE may be common UE that includes a Relay enhanced function, where the Relay enhanced function includes, but is not limited to, a QoS function; and the RN-UE is configured to allocate different transmission resources to services having different priorities. Correspondingly, the RN-eNB may also be a common eNB that includes a Relay enhanced function.

Step 504. The RN-eNB communicates with first UE in the scheduling period by using a second RB resource, where the first UE is UE to which the first RN provides a service, and the second RB resource is an RB resource that is in the first frequency band and that is different from the first RB resource.

The communicating, by the first RN, with the first UE includes: establishing an access link with the first UE by using the second RB resource, and performing data transmission, or the like.

Further, the second RB resource is also different from the third RB resource. In this way, it is avoided that the second backhaul link generates interference when the first RN communicates with UE that accesses the first RN.

In this embodiment of the present invention, a first RN receives allocation information that is sent by a DeNB, and communicates with first UE in a scheduling period by using a second RB resource, where the allocation information is used to indicate a first RB resource that is to be occupied by a first backhaul link in a scheduling period that is after a preset delay time, the first backhaul link is a link between the first RN and the DeNB, and the second RB resource is an RB resource that is in a first frequency band and that is different from the first RB resource. In this way, different RB resources are separately used to transmit data on an access link and a backhaul link of the first RN. Therefore, the access link and the backhaul link may be simultaneously used while no interference is caused. In addition, an MBSFN subframe no longer needs to be used to perform transmission, and an RN-eNB does not need to be modified, thereby reducing costs, and resolving a device compatibility problem to a great extent.

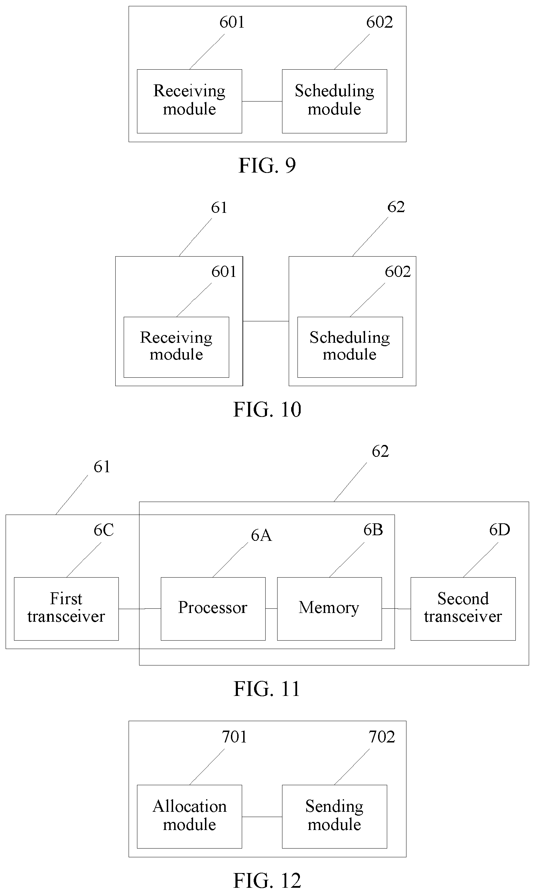

FIG. 9 provides a schematic structural diagram of an LTE in-band relay apparatus, where the apparatus is a first RN or is integrated on a first RN, and is configured to execute the LTE in-band relay method that corresponds to FIG. 2, FIG. 3, or FIG. 8. Referring to FIG. 9, the apparatus includes:
a receiving module 601, configured to receive allocation information that is sent by a DeNB, where the allocation information is used to indicate a first RB resource that is to be occupied by a first backhaul link in a scheduling period, and the first backhaul link is a link between a first RN and the DeNB.

A length of a scheduling period may be 1 ms, that is, a length of a subframe. A subframe is defined by two aspects: a time domain and a frequency domain, where the time domain includes a symbol, and the frequency domain includes a radio bearer resource (that is, a subcarrier). Because the DeNB usually allocates a radio bearer resource to an accessed device (which includes an RN and UE) in each subframe, a length of a subframe is also used as a period of the radio bearer resource that is indicated by the allocation information and that is to be occupied by the first backhaul link.
a scheduling module 602, configured to communicate with first UE in the scheduling period by using a second RB resource, where the first UE is UE to which the first RN provides a service, and the second RB resource is an RB resource that is in a preset frequency band and that is different from the first RB resource.

When the scheduling module 602 communicates with the first UE, the scheduling module 602 establishes an access link with the first UE by using the second RB resource, and then performs data transmission.

In this embodiment of the present invention, the first backhaul link may occupy RB resources that are at two ends of the first frequency band, and may occupy one or more RB resources at each end; and an access link occupies an RB resource that is in the middle of the first frequency band.

In an implementation manner of the embodiment of the present invention, the receiving module 601 is specifically configured to:
receive, by using an R-PDCCH, the allocation information that is sent by the DeNB.

In another implementation manner of the present invention, a radio bearer resource occupied by an R-PDCCH is a part of radio bearer resources in the first frequency band, and is specifically a part of radio bearer resources in a symbol, except a symbol used by a PDCCH, in a subframe. For example, the first to third symbols in a subframe are used as a PDCCH, and one to two (or another quantity) RB resources in remaining symbols of the subframe are used as an R-PDCCH.

As a preferred implementation manner, an RB resource occupied by an R-PDCCH may be RB resources that are at two ends of the first frequency band, and one or more RB resources may be occupied at each end. The allocation information is transmitted by means of modulation and coding by simultaneously using RB resources that are at two ends of a frequency band, thereby avoiding that when one RB resource is used to perform transmission, signal interference causes a data loss or error problem, and reducing impact of signal interference on transmission.

In this embodiment of the present invention, the LTE in-band relay apparatus may be a first RN, where the first RN includes an RN-eNB and RN-UE, and the RN-eNB is connected to the RN-UE. Specific implementation may be that the RN-UE includes the receiving module 601, and the RN-eNB includes the scheduling module 602.

Specifically, the RN-UE is configured to receive the allocation information that is sent by the DeNB, and send the allocation information to the RN-eNB; and
the RN-eNB is configured to communicate with the first UE in the scheduling period by using the second RB resource.

Further, the allocation information is further used to indicate a third RB resource that is to be occupied by at least one second backhaul link in the scheduling period, the second backhaul link is a link between the DeNB and a second RN, the second RN is another RN, which accesses the DeNB, except the first RN, and the second RB resource is different from the third RB resource. In this way, it is avoided that the second backhaul link generates interference when the first RN communicates with UE that accesses the first RN.

The RN-UE sends the allocation information to the RN-eNB in the first RN by using a self-defined interface, where the self-defined interface includes, but is not limited to, a bus interface or a local area network interface.

As shown in FIG. 10, in an implementation manner of an embodiment of the present invention, RN-UE 61 and an RN-eNB 62 are two parts that are independent from each other. For example, the RN-UE 61 and the RN-eNB 62 may be two independent devices, and in this case, specific functional chips are separately configured in the two devices, where a functional chip in the RN-UE 61 is used as the receiving module 601, and a functional chip in the RN-eNB 62 is used as the scheduling module 602. For another example, the RN-UE 61 and the RN-eNB 62 may also be two chips in a same IT container, and in this case, specific functional modules are separately configured in the two chips, where a functional module in the RN-UE 61 is used as the receiving module 601, and a functional module in the RN-eNB 62 is used as the scheduling module 602. For still another example, the RN-UE 61 and the RN-eNB 62 may also be two functional modules in one chip, and in this case, specific hardware circuits are separately configured in the two functional modules, where a hardware circuit in the RN-UE 61 is used as the receiving module 601, and a hardware circuit in the RN-eNB 62 is used as the scheduling module 602.

As shown in FIG. 11, in another implementation manner of an embodiment of the present invention, the RN-UE 61 and the RN-eNB 62 may share some hardware. For example, as shown in the figure, the RN-UE 61 and the RN-eNB 62 share components such as a processor 6A and a memory 6B, but independent hardware parts such as a first transceiver 6C in the RN-UE 61 and a second transceiver 6D in the RN-eNB 62 are also disposed in the RN-UE 61 and the RN-eNB 62, where the first transceiver 6C and the second transceiver 6D may be used as the receiving module 601 and the scheduling module 602 respectively.

Certainly, corresponding software may further be stored in the foregoing device, chip, or functional module, so that a corresponding function is generated in a process of executing the software, to implement the receiving module 601 and the scheduling module 602.

In this embodiment of the present invention, allocation information that is sent by a DeNB is received, and communication with first UE is performed in a scheduling period by using a second RB resource, where the allocation information is used to indicate a first RB resource that is to be occupied by a first backhaul link in a scheduling period that is after a preset delay time, the first backhaul link is a link between the first RN and the DeNB, and the second RB resource is an RB resource that is in a first frequency band and that is different from the first RB resource. In this way, different RB resources are separately used to transmit data on an access link and a backhaul link of the first RN. Therefore, the access link and the backhaul link may be simultaneously used while no interference is caused. In addition, an MBSFN subframe no longer needs to be used to perform transmission, and an RN-eNB does not need to be modified, thereby reducing costs, and resolving a device compatibility problem to a great extent.

FIG. 12 provides a schematic structural diagram of an LTE in-band relay apparatus, where the apparatus is a DeNB or is integrated on a DeNB, and is configured to execute the LTE in-band relay method that corresponds to FIG. 6, FIG. 7, or FIG. 8. Referring to FIG. 12, the apparatus includes:
an allocation module 701, configured to allocate, to a first backhaul link, a first RB resource that is in a first frequency band and that is to be occupied in a scheduling period, where the first backhaul link is a link between a DeNB and a first RN that accesses the DeNB; and
a sending module 702, configured to send allocation information to the first RN, where the allocation information is used to indicate the first RB resource that is to be occupied by the first backhaul link in the scheduling period, so that the first RN communicates with first UE in the scheduling period by using a second RB resource, where the first UE is UE to which the first RN provides a service, and the second RB resource is an RB resource that is in the preset frequency band and that is different from the first RB resource.

Further, the allocation module 701 is specifically configured to periodically allocate, to the first backhaul link according to at least one of a data volume and a priority of a service on the first backhaul link, the first RB resource that is to be occupied in a scheduling period that is after a preset delay time.

Specifically, the allocating the first RB resource to the first backhaul link according to the data volume and the priority of the service on the first backhaul link refers to comparing a data volume of to-be-transmitted data on the first backhaul link and a data volume of to-be-transmitted data on an access link, and/or comparing the priority of the service on the first backhaul link and a priority of a service on an access link, and performing allocation according to an existing RB allocation policy. For example, when the priority of the service on the first backhaul link is higher than a priority of a service on an access link that corresponds to second UE, an idle RB resource is preferentially allocated to the first backhaul link. The access link is a link between the DeNB and the second UE, and first UE is UE to which the DeNB provides a service.

Further, in the foregoing allocation process, the DeNB periodically allocates, to the first backhaul link, an RB resource to be occupied in a scheduling period; therefore, the period herein is related to a length of the scheduling period, and the action of allocation is performed in real time. Compared with semi-static configuration implemented by using an MBSFN subframe in the prior art (that is, a length of the MBSFN subframe is fixed, and a symbol occupied to perform receiving and sending is also fixed), RB resource allocation in real time can be performed according to a service requirement, and can avoid resource waste caused by static allocation.

Specifically, because it takes a time for the DeNB to send allocation information to the first RN, to ensure that the first RN can normally use the radio bearer resource that is indicated by the allocation information, the first radio bearer resource indicated by the allocation information is allocated to the first backhaul link after a preset delay time. The preset delay time is related to factors such as transmission delays between the DeNB and the RN-UE, and between the RN-UE and the RN-eNB, and the preset delay time may be set according to an actual case, for example, the preset delay time is greater than or equal to 1 millisecond, and the preset delay time is less than or equal to 8 milliseconds.

In this embodiment of the present invention, a length of a scheduling period may be 1 ms, that is, a length of a subframe. A subframe is defined by two aspects: a time domain and a frequency domain, where the time domain includes a symbol, and the frequency domain includes a radio bearer resource (that is, a subcarrier). Because the DeNB usually allocates a radio bearer resource to an accessed device (which includes an RN and UE) in each subframe, a length of a subframe is also used as a period of the radio bearer resource that is indicated by the allocation information and that is to be occupied by the first backhaul link.

Further, the allocation information is further used to indicate a third RB resource that is to be occupied by at least one second backhaul link in a scheduling period that is after a preset delay time, the second backhaul link is a link between the DeNB and a second RN, the second RN is another RN, which accesses the DeNB, except the first RN, and the second RB resource is different from the third RB resource. In this way, it is avoided that the second backhaul link generates interference when the first RN communicates with UE that accesses the first RN.

Specifically, the sending module 702 is specifically configured to send the allocation information to the first RN by using an R-PDCCH.

In another implementation manner of the present invention, a radio bearer resource occupied by an R-PDCCH is a part of radio bearer resources in the first frequency band, and is specifically a part of radio bearer resources in a symbol, except a symbol used by a PDCCH, in a subframe. For example, the first to third symbols in a subframe are used as a PDCCH, and one to two (or another quantity) RB resources in remaining symbols of the subframe are used as an R-PDCCH.

As a preferred implementation manner, an RB resource occupied by an R-PDCCH is RB resources that are at two ends of the first frequency band, and one or more RB resources may be occupied at each end. The allocation information is transmitted by means of modulation and coding by simultaneously using RB resources that are at two ends of a frequency band, thereby avoiding that when one RB resource is used to perform transmission, signal interference causes a data loss or error problem, and reducing impact of signal interference on transmission.

In this embodiment of the present invention, the LTE in-band relay apparatus may be a DeNB. During specific implementation, the allocation module 701 and the sending module 702 may be two independent functional chips. The allocation module 701 and the sending module 702 may also be disposed in a same chip, and the allocation module 701 and the sending module 702 are two functional modules that are configured in the chip. The allocation module 701 and the sending module 702 may also be disposed in a same functional module, and the allocation module 701 and the sending module 702 are two functional hardware circuits that are configured in the functional module. Certainly, corresponding software may further be stored in the foregoing chip or functional module, so that a corresponding function is generated in a process of executing the software, to implement the allocation module 701 and the sending module 702.

In this embodiment of the present invention, a first RB resource that is to be occupied in a scheduling period is allocated to a first backhaul link, and allocation information is sent to a first RN, where the allocation information is used to indicate the first RB resource that is to be occupied by the first backhaul link in a scheduling period that is after a preset delay time, so that the first RN communicates with first UE in the scheduling period by using a second RB resource, where the first UE is UE to which the first RN provides a service, and the second RB resource is an RB resource that is in a preset frequency band and that is different from the first RB resource. In this way, different RB resources are separately used to transmit data on an access link and a backhaul link of a relay node. Therefore, the access link and the backhaul link may be simultaneously used while no interference is caused. In addition, an MBSFN subframe no longer needs to be used to perform transmission, and an RN-eNB does not need to be modified, thereby reducing costs, and resolving a device compatibility problem to a great extent.

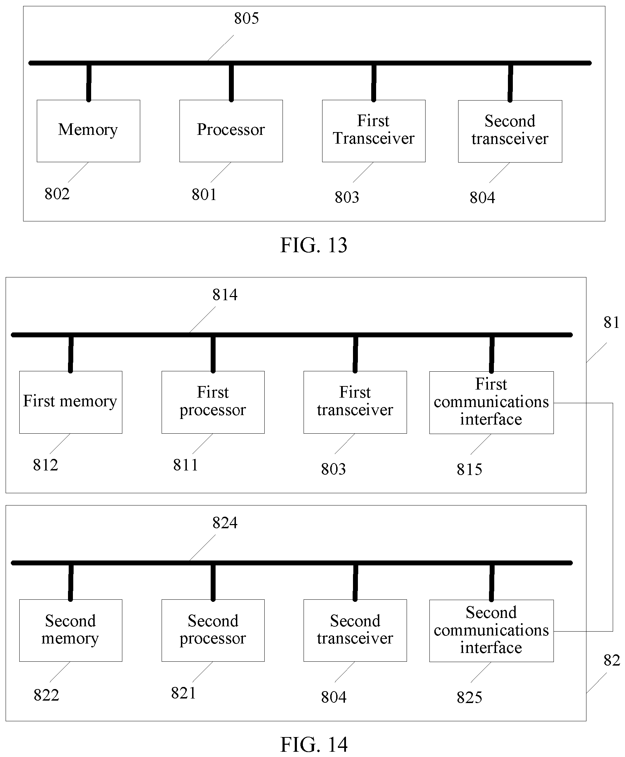

FIG. 13 provides a schematic structural diagram of an LTE in-band relay apparatus. Referring to FIG. 13, the apparatus includes: at least one processor 801, at least one memory 802, a first transceiver 803, a second transceiver 804, and a bus system 805. The at least one processor 801, the at least one memory 802, the first transceiver 803, and the second transceiver 804 communicate with each other by using the bus system 805, the first transceiver 803 is configured to communicate with a DeNB, the second transceiver 804 is configured to communicate with first UE, the at least one memory 802 is configured to store a computer execution instruction, and when the apparatus runs, the at least one processor 801 executes the computer execution instruction stored in the at least one memory 802, so that the apparatus executes the LTE in-band relay method that corresponds to FIG. 2, FIG. 3, or FIG. 8.

Specifically, the at least one processor 801 is specifically configured to:
control the first receiver 803 to receive allocation information that is sent by a DeNB, where the allocation information is used to indicate a first RB resource that is to be occupied by a first backhaul link in a scheduling period, and the first backhaul link is a link between a first RN and the DeNB; and
control the second transceiver 804 to communicate with first UE in the scheduling period by using a second RB resource, where the first UE is UE to which the first RN provides a service, and the second RB resource is an RB resource that is in a preset frequency band and that is different from the first RB resource.

Further, the at least one processor is specifically configured to:
control the first receiver 803 to receive, by using an R-PDCCH, the allocation information that is sent by the DeNB, where an RB resource occupied by the R-PDCCH is a part of RB resources in the preset frequency band.

In this embodiment of the present invention, the RB resource occupied by the R-PDCCH is RB resources that are at two ends of the preset frequency band.

In this embodiment of the present invention, the allocation information is specifically used to indicate the first RB resource that is to be occupied by the first backhaul link in a scheduling period that is after a preset delay time.

In this embodiment of the present invention, the preset delay time is greater than or equal to 1 millisecond, and the preset delay time is less than or equal to 8 milliseconds.

Specifically, the at least one processor 801 includes at least one first processor and at least one second processor, the at least one memory 802 includes a first memory and a second memory, and the bus system 805 includes a first bus and a second bus.

Referring to FIG. 14, an LTE in-band relay apparatus includes an RN-eNB 81 and RN-UE 82. The RN-eNB 81 includes at least one first processor 811, a first memory 812, a first transceiver 803, a first bus 814, and a first communications interface 815. The first processor 811, the first memory 812, the first transceiver 803, and the first communications interface 815 communicate with each other by using the first bus 814, the first memory 812 is configured to store a computer execution instruction, and when the RN-eNB 81 runs, the at least one first processor 811 executes the computer execution instruction stored in the first memory 812, so that the RN-eNB 81 executes the LTE in-band relay method that corresponds to FIG. 2, FIG. 3, or FIG. 8. The RN-UE 82 includes at least one second processor 821, a second memory 822, a second transceiver 804, a second bus 824, and a second communications interface 825. The second processor 821, the second memory 822, the second transceiver 804, and the second communications interface 825 communicate with each other by using the second bus 824, the second memory 822 is configured to store a computer execution instruction, and when the RN-UE 82 runs, the at least one second processor 821 executes the computer execution instruction stored in the second memory 822, so that the RN-UE 82 executes the LTE in-band relay method that corresponds to FIG. 2, FIG. 3, or FIG. 8. The first communications interface 815 and the second communications interface 825 are connected.

To be more specific, the at least one first processor 811 is configured to control the first transceiver 803 to receive allocation information that is sent by a DeNB; and the at least one second processor 821 is configured to control the second transceiver 804 to communicate with first UE in the scheduling period by using a second RB resource.

Further, the second processor 821 is specifically configured to control the second communications interface 825 to send, by using the first communications interface 815, the allocation information to the RN-eNB 81.

In this embodiment of the present invention, the allocation information is further used to indicate a third RB resource that is to be occupied by at least one second backhaul link in the scheduling period, the second backhaul link is a link between a second RN and the DeNB, the second RN is another RN, which accesses the DeNB, except a first RN, and the second RB resource is different from the third RB resource.

In this embodiment of the present invention, allocation information that is sent by a DeNB is received, and communication with first UE is performed in a scheduling period by using a second RB resource, where the allocation information is used to indicate a first RB resource that is to be occupied by a first backhaul link in a scheduling period that is after a preset delay time, the first backhaul link is a link between the first RN and the DeNB, and the second RB resource is an RB resource that is in a first frequency band and that is different from the first RB resource. In this way, different RB resources are separately used to transmit data on an access link and a backhaul link of the first RN. Therefore, the access link and the backhaul link may be simultaneously used while no interference is caused. In addition, an MBSFN subframe no longer needs to be used to perform transmission, and an RN-eNB does not need to be modified, thereby reducing costs, and resolving a device compatibility problem to a great extent.

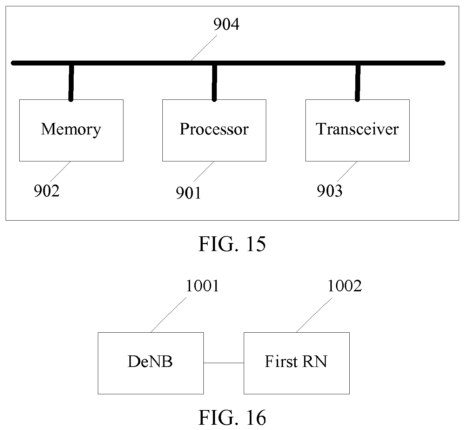

FIG. 15 provides a schematic structural diagram of an LTE in-band relay apparatus. Referring to FIG. 15, the apparatus includes: at least one processor 901, a memory 902, a transceiver 903, and a bus system 904. The at least one processor 901, the memory 902, and the transceiver 903 communicate with each other by using the bus system 904, the transceiver 903 is configured to communicate with a first RN, the memory 902 is configured to store a computer execution instruction, and when the apparatus runs, the processor 901 executes the computer execution instruction stored in the memory 902, so that the apparatus executes the LTE in-band relay method that corresponds to FIG. 6, FIG. 7, or FIG. 8.

Specifically, the at least one processor 901 is specifically configured to allocate, to a first backhaul link, a first RB resource that is in a preset frequency band and that is to be occupied in a scheduling period, where the first backhaul link is a link between a DeNB and the first RN that accesses the DeNB; and
control the transceiver 903 to send allocation information to the first RN, where the allocation information is used to indicate the first RB resource that is to be occupied by the first backhaul link in the scheduling period

Further, the at least one processor 901 is specifically configured to:
periodically allocate, to the first backhaul link according to at least one of a data volume and a priority of a service on the first backhaul link, the first RB resource that is to be occupied in a scheduling period that is after a preset delay time.

Further, the at least one processor 901 is specifically configured to:
control the transceiver 903 to send, by using an R-PDCCH, the allocation information to the first RN, where an RB resource occupied by the R-PDCCH is a part of RB resources in the preset frequency band.

In this embodiment of the present invention, the RB resource occupied by the R-PDCCH is RB resources that are at two ends of the preset frequency band.

In this embodiment of the present invention, the allocation information is further used to indicate a third RB resource that is to be occupied by at least one second backhaul link in the scheduling period, the second backhaul link is a link between the DeNB and a second RN, and the second RN is another RN, which accesses the DeNB, except the first RN.

In this embodiment of the present invention, a first RB resource that is to be occupied in a scheduling period is allocated to a first backhaul link, and allocation information is sent to a first RN, where the allocation information is used to indicate the first RB resource that is to be occupied by the first backhaul link in a scheduling period that is after a preset delay time, so that the first RN communicates with first UE in the scheduling period by using a second RB resource, where the first UE is UE to which the first RN provides a service, and the second RB resource is an RB resource that is in a preset frequency band and that is different from the first RB resource. In this way, different RB resources are separately used to transmit data on an access link and a backhaul link of a relay node. Therefore, the access link and the backhaul link may be simultaneously used while no interference is caused. In addition, an MBSFN subframe no longer needs to be used to perform transmission, and an RN-eNB does not need to be modified, thereby reducing costs, and resolving a device compatibility problem to a great extent.

An embodiment of the present invention further provides a storage medium, configured to store one or more computer programs, where the one or more computer programs include program code, and when the computer programs run, the program code is used to execute the LTE in-band relay method that corresponds to FIG. 2, FIG. 3, or FIG. 8.

An embodiment of the present invention further provides a storage medium, configured to store one or more computer programs, where the one or more computer programs include program code, and when the computer programs run, the program code is used to execute the LTE in-band relay method that corresponds to FIG. 6, FIG. 7, or FIG. 8.

FIG. 16 provides a schematic structural diagram of an LTE in-band relay system. Referring to FIG. 16, the system includes: a DeNB 1001 and a first RN 1002, where the DeNB 1001 is configured to execute the LTE in-band relay method that corresponds to FIG. 6, FIG. 7, or FIG. 8, and the first RN 1002 is configured to execute the LTE in-band relay method that corresponds to FIG. 2, FIG. 3, or FIG. 8.

In this embodiment of the present invention, a first RN receives allocation information that is sent by a DeNB, and communicates with first UE in a scheduling period by using a second RB resource, where the allocation information is used to indicate a first RB resource that is to be occupied by a first backhaul link in a scheduling period that is after a preset delay time, the first backhaul link is a link between the first RN and the DeNB, and the second RB resource is an RB resource that is in a first frequency band and that is different from the first RB resource. In this way, different RB resources are separately used to transmit data on an access link and a backhaul link of the first RN. Therefore, the access link and the backhaul link may be simultaneously used while no interference is caused. In addition, an MBSFN subframe no longer needs to be used to perform transmission, and an RN-eNB does not need to be modified, thereby reducing costs, and resolving a device compatibility problem to a great extent.

## Claims

1. An LTE in band relay method, wherein the method comprises:
receiving (101), by a first relay node, allocation information that is sent by a donor eNodeB, wherein the allocation information is used to indicate a first radio bearer resource that is to be occupied by a first backhaul link in a scheduling period, and the first backhaul link is a link between the first relay node and the donor eNodeB; and
communicating (102), by the first relay node, with first user equipment in the scheduling period by using a second radio bearer resource, wherein the first user equipment is user equipment to which the first relay node provides a service, and the second radio bearer resource is a radio bearer resource that is in a preset frequency band and that is different from the first radio bearer resource;
wherein the receiving, by a first relay node, allocation information that is sent by a donor eNodeB comprises:
receiving (201), by the first relay node by using a relay physical downlink control channel, the allocation information that is sent by the donor eNodeB, wherein a radio bearer resource occupied by the relay physical downlink control channel is at least one radio bearer resource of radio bearer resources in the preset frequency band, wherein the relay physical downlink control channel occupies radio bearer resources that are at two ends of the preset frequency band.

2. The method according to claim 1, wherein the allocation information is specifically used to indicate the first radio bearer resource that is to be occupied by the first backhaul link in a scheduling period that is after a preset delay time.

3. The method according to claim 2, wherein the preset delay time is greater than or equal to 1 millisecond, and the preset delay time is less than or equal to 8 milliseconds.

4. The method according to any one of claims 1 to 3, wherein the first relay node comprises a relay base station and relay user equipment, and the relay base station and the relay user equipment are connected by using a communications interface.

5. The method according to claim 4, wherein the receiving, by a first relay node, allocation information that is sent by a donor eNodeB comprises:
receiving, by the relay user equipment, the allocation information that is sent by the donor eNodeB, and sending the allocation information to the relay base station; and
the communicating with first user equipment in the scheduling period by using a second radio bearer resource comprises:
communicating, by the relay base station, with the first user equipment in the scheduling period by using the second radio bearer resource.

6. The method according to any one of claims 1 to 5, wherein the allocation information is further used to indicate a third radio bearer resource that is to be occupied by at least one second backhaul link in the scheduling period, the second backhaul link is a link between a second relay node and the donor eNodeB, the second relay node is another relay node, which accesses the donor eNodeB, except the first relay node, and the second radio bearer resource is different from the third radio bearer resource.

7. An LTE in band first relay node apparatus, wherein the apparatus comprises:
a receiving module (601), configured to receive allocation information that is sent by a donor eNodeB, wherein the allocation information is used to indicate a first radio bearer resource that is to be occupied by a first backhaul link in a scheduling period, and the first backhaul link is a link between the first relay node and the donor eNodeB; and
a scheduling module (602), configured to communicate with first user equipment in the scheduling period by using a second radio bearer resource, wherein the first user equipment is user equipment to which the first relay node provides a service, and the second radio bearer resource is a radio bearer resource that is in a preset frequency band and that is different from the first radio bearer resource;
wherein the receiving module (601) is specifically configured to:
receive, by using a relay physical downlink control channel, the allocation information that is sent by the donor eNodeB, wherein a radio bearer resource occupied by the relay physical downlink control channel is at least one radio bearer resource of radio bearer resources in the preset frequency band, wherein the relay physical downlink control channel occupies radio bearer resources that are at two ends of the preset frequency band.

8. The apparatus according to claim 7, wherein the allocation information is specifically used to indicate the first radio bearer resource that is to be occupied by the first backhaul link in a scheduling period that is after a preset delay time.

9. The apparatus according to claim 8, wherein the preset delay time is greater than or equal to 1 millisecond, and the preset delay time is less than or equal to 8 milliseconds.

10. The apparatus according to any one of claims 7 to 9, wherein the LTE in-band relay apparatus is the first relay node, the first relay node comprises a relay base station and relay user equipment, the relay base station and the relay user equipment are connected by using a communications interface, the relay user equipment comprises the receiving module (601), and the relay base station comprises the scheduling module (602).

11. The apparatus according to claim 10, wherein the relay user equipment is configured to receive the allocation information that is sent by the donor eNodeB, and send the allocation information to the relay base station; and
the relay base station is configured to communicate with the first user equipment in the scheduling period by using the second radio bearer resource.

## Patentansprüche

1. LTE-Inband-Relaisverfahren, wobei das Verfahren Folgendes aufweist:
Empfangen (101), durch einen ersten Relaisknoten, von Zuweisungsinformationen, die durch einen Donor-eNodeB gesendet werden, wobei die Zuweisungsinformationen verwendet werden, um eine erste Funkträgerressource anzuzeigen, die durch eine erste Rücktransportverbindung in einer Planungsperiode zu belegen ist, und wobei die erste Rücktransportverbindung eine Verbindung zwischen dem ersten Relaisknoten und dem Donor-eNodeB ist; und
Kommunizieren (102), durch den ersten Relaisknoten, mit einem ersten Benutzergerät in der Planungsperiode unter Verwendung einer zweiten Funkträgerressource, wobei das erste Benutzergerät ein Benutzergerät ist, für das der erste Relaisknoten einen Dienst bereitstellt, und wobei die zweite Funkträgerressource eine Funkträgerressource ist, die in einem voreingestellten Frequenzband ist und die von der ersten Funkträgerressource verschieden ist;
wobei das Empfangen, durch einen ersten Relaisknoten, von Zuweisungsinformationen, die durch einen Donor-eNodeB gesendet werden, Folgendes aufweist:
Empfangen (201), durch den ersten Relaisknoten, unter Verwendung eines physischen Downlink-Relaissteuerkanals, der Zuweisungsinformationen, die durch den Donor-eNodeB gesendet werden, wobei eine durch den physischen Downlink-Relaissteuerkanal belegte Funkträgerressource zumindest eine Funkträgerressource von Funkträgerressourcen im voreingestellten Frequenzband ist, wobei der physische Downlink-Relaissteuerkanal Funkträgerressourcen belegt, die an zwei Enden des voreingestellten Frequenzbands sind.

2. Verfahren nach Anspruch 1, wobei die Zuweisungsinformationen speziell verwendet werden, um die erste Funkträgerressource anzuzeigen, die durch die erste Rücktransportverbindung in einer Planungsperiode, die nach einer voreingestellten Verzögerungszeit ist, zu belegen ist.

3. Verfahren nach Anspruch 2, wobei die voreingestellte Verzögerungszeit größer als oder gleich 1 Millisekunde ist und wobei die voreingestellte Verzögerungszeit kleiner als oder gleich 8 Millisekunden ist.

4. Verfahren nach einem der Ansprüche 1 bis 3, wobei der erste Relaisknoten eine Relaisbasisstation und ein Relaisbenutzergerät aufweist und wobei die Relaisbasisstation und das Relaisbenutzergerät unter Verwendung einer Kommunikationsschnittstelle verbunden sind.

5. Verfahren nach Anspruch 4, wobei das Empfangen, durch einen ersten Relaisknoten, von Zuweisungsinformationen, die durch einen Donor-eNodeB gesendet werden, Folgendes aufweist:
Empfangen, durch das Relaisbenutzergerät, der Zuweisungsinformationen, die durch den Donor-eNodeB gesendet werden, und Senden der Zuweisungsinformationen an die Relaisbasisstation; und
wobei das Kommunizieren mit dem ersten Benutzergerät in der Planungsperiode unter Verwendung einer zweiten Funkträgerressource Folgendes aufweist:
Kommunizieren, durch die Relaisbasisstation, mit dem ersten Benutzergerät in der Planungsperiode unter Verwendung der zweiten Funkträgerressource.

6. Verfahren nach einem der Ansprüche 1 bis 5, wobei die Zuweisungsinformationen ferner verwendet werden, um eine dritte Funkträgerressource anzuzeigen, die durch zumindest eine zweite Rücktransportverbindung in der Planungsperiode zu belegen ist, wobei die zweite Rücktransportverbindung eine Verbindung zwischen einem zweiten Relaisknoten und dem Donor-eNodeB ist, der zweite Relaisknoten ein weiterer Relaisknoten ist, der auf den Donor-eNodeB zugreift, ausgenommen den ersten Relaisknoten, und die zweite Funkträgerressource von der dritten Funkträgerressource verschieden ist.

7. Erste LTE-Inband-Relaisknotenvorrichtung, wobei die Vorrichtung Folgendes aufweist:
ein Empfangsmodul (601), ausgebildet zum Empfangen von Zuweisungsinformationen, die durch einen Donor-eNodeB gesendet werden, wobei die Zuweisungsinformationen verwendet werden, um eine erste Funkträgerressource anzuzeigen, die durch eine erste Rücktransportverbindung in einer Planungsperiode zu belegen ist, und wobei die erste Rücktransportverbindung eine Verbindung zwischen dem ersten Relaisknoten und dem Donor-eNodeB ist; und
ein Planungsmodul (602), ausgebildet zum Kommunizieren mit einem ersten Benutzergerät in der Planungsperiode unter Verwendung einer zweiten Funkträgerressource, wobei das erste Benutzergerät ein Benutzergerät ist, für das der erste Relaisknoten einen Dienst bereitstellt, und wobei die zweite Funkträgerressource eine Funkträgerressource ist, die in einem voreingestellten Frequenzband ist und die von der ersten Funkträgerressource verschieden ist;
wobei das Empfangsmodul (601) speziell ausgebildet ist zum:
Empfangen, unter Verwendung eines physischen Downlink-Relaissteuerkanals, der Zuweisungsinformationen, die durch den Donor-eNodeB gesendet werden, wobei eine durch den physischen Downlink-Relaissteuerkanal belegte Funkträgerressource zumindest eine Funkträgerressource von Funkträgerressourcen im voreingestellten Frequenzband ist, wobei der physische Downlink-Relaissteuerkanal Funkträgerressourcen belegt, die an zwei Enden des voreingestellten Frequenzbands sind.

8. Vorrichtung nach Anspruch 7, wobei die Zuweisungsinformationen speziell verwendet werden, um die erste Funkträgerressource anzuzeigen, die durch die erste Rücktransportverbindung in einer Planungsperiode, die nach einer voreingestellten Verzögerungszeit ist, zu belegen ist.

9. Vorrichtung nach Anspruch 8, wobei die voreingestellte Verzögerungszeit größer als oder gleich 1 Millisekunde ist und wobei die voreingestellte Verzögerungszeit kleiner als oder gleich 8 Millisekunden ist.

10. Vorrichtung nach einem der Ansprüche 7 bis 9, wobei die LTE-Inband-Relaisvorrichtung der erste Relaisknoten ist, der erste Relaisknoten eine Relaisbasisstation und ein Relaisbenutzergerät aufweist, die Relaisbasisstation und das Relaisbenutzergerät unter Verwendung einer Kommunikationsschnittstelle verbunden werden, das Relaisbenutzergerät das Empfangsmodul (601) aufweist und die Relaisbasisstation das Planungsmodul (602) aufweist.

11. Vorrichtung nach Anspruch 10, wobei das Relaisbenutzergerät ausgebildet ist zum Empfangen der Zuweisungsinformationen, die durch den Donor-eNodeB gesendet werden, und Senden der Zuweisungsinformationen an die Relaisbasisstation; und
die Relaisbasisstation ausgebildet ist zum Kommunizieren mit dem ersten Benutzergerät in der Planungsperiode unter Verwendung der zweiten Funkträgerressource.

## Revendications

1. Procédé de relais intra-bande LTE, ce procédé comprenant :
la réception (101), par un premier nœud de relais, d'informations d'attribution qui sont envoyées par un nœud B évolué donneur, ces informations d'attribution étant utilisées pour indiquer une première ressource de support radio qui doit être occupée par une première liaison terrestre pendant une période de planification, et cette première liaison terrestre étant une liaison entre le premier nœud de relais et le nœud B évolué donneur ; et
la communication (102), par le premier nœud de relais, avec un premier équipement utilisateur pendant la période de planification en utilisant une deuxième ressource de support radio, ce premier équipement utilisateur étant un équipement utilisateur auquel le premier nœud de relais fournit un service, et la deuxième ressource de support radio étant une ressource de support radio qui est dans une bande de fréquences prédéterminée et qui est différente de la première ressource de support radio ;
la réception, par un premier nœud de relais, d'informations d'attribution qui sont envoyées par un nœud B évolué donneur comprenant :
la réception (201), par le premier nœud de relais en utilisant un canal de commande de liaison descendante physique de relais, des informations d'attribution qui sont envoyées par le nœud B évolué donneur, une ressource de support radio occupée par le canal de commande de liaison descendante physique de relais étant au moins une ressource de support radio de ressources de support radio dans la bande de fréquences prédéterminée, le canal de commande de liaison descendante physique de relais occupant des ressources de support radio qui sont à deux extrémités de la bande de fréquences prédéterminée.

2. Procédé selon la revendication 1, dans lequel les informations d'attribution sont utilisées spécifiquement pour indiquer la première ressource de support radio qui doit être occupée par la première liaison terrestre pendant une période de planification qui est après un temps de retard prédéterminé.

3. Procédé selon la revendication 2, dans lequel le temps de retard prédéterminé est plus grand que ou égal à 1 milliseconde, et le temps de retard prédéterminé est moins que ou égal à 8 millisecondes.

4. Procédé selon l'une quelconque des revendications 1 à 3, dans lequel le premier nœud de relais comprend une station de base de relais et un équipement utilisateur de relais, et dans lequel cette station de base de relais et cet équipement utilisateur de relais sont connectés en utilisant une interface de communication.

5. Procédé selon la revendication 4, dans lequel la réception, par un premier nœud de relais, d'informations d'attribution qui sont envoyées par un nœud B évolué donneur comprend :
la réception, par l'équipement utilisateur de relais, des informations d'attribution qui sont envoyées par le nœud B évolué donneur, et l'envoi de ces informations d'attribution à la station de base de relais ; et dans lequel
la communication avec un premier équipement utilisateur pendant la période de planification en utilisant une deuxième ressource de support radio comprend :
la communication, par la station de base de relais, avec le premier équipement utilisateur pendant la période de planification en utilisant la deuxième ressource de support radio.

6. Procédé selon l'une quelconque des revendications 1 à 5, dans lequel les informations d'attribution sont utilisées en outre de façon à indiquer une troisième ressource de support radio qui doit être occupée par au moins une deuxième liaison terrestre pendant la période de planification, cette deuxième liaison terrestre étant une liaison entre un deuxième nœud de relais et le nœud B évolué donneur, ce deuxième nœud de relais étant un autre nœud de relais, qui accède au nœud B évolué donneur, sauf le premier nœud de relais, et la deuxième ressource de support radio étant différente de la troisième ressource de support radio.

7. Appareil de premier nœud de relais intra-bande LTE, cet appareil comprenant :
un module de réception (601), configuré de façon à recevoir des informations d'attribution qui sont envoyées par un nœud B évolué donneur, ces informations d'attribution étant utilisées pour indiquer une première ressource de support radio qui doit être occupée par une première liaison terrestre pendant une période de planification, et cette première liaison terrestre étant une liaison entre le premier nœud de relais et le nœud B évolué donneur ; et
un module de planification (602), configuré de façon à communiquer avec un premier équipement utilisateur pendant la période de planification en utilisant une deuxième ressource de support radio, ce premier équipement utilisateur étant un équipement utilisateur auquel le premier nœud de relais fournit un service, et cette deuxième ressource de support radio étant une ressource de support radio qui est dans une bande de fréquences prédéterminée et qui est différente de la première ressource de support radio ; ce module de réception (601) étant configuré spécifiquement de façon à :
recevoir, en utilisant un canal de commande de liaison descendante physique de relais, les informations d'attribution qui sont envoyées par le nœud B évolué donneur, une ressource de support radio occupée par ce canal de commande de liaison descendante physique de relais étant au moins une ressource de support radio de ressources de support radio dans la bande de fréquences prédéterminée, le canal de commande de liaison descendante physique de relais occupant des ressources de support radio qui sont à deux extrémités de la bande de fréquences prédéterminée.

8. Appareil selon la revendication 7, dans lequel les informations d'attribution sont utilisées spécifiquement pour indiquer la première ressource de support radio qui doit être occupée par la première liaison terrestre pendant une période de planification qui est après un temps de retard prédéterminé.

9. Appareil selon la revendication 8, dans lequel le temps de retard prédéterminé est plus grand que ou égal à 1 milliseconde, et le temps de retard prédéterminé est moins que ou égal à 8 millisecondes.

10. Appareil selon l'une quelconque des revendications 7 à 9, cet appareil de relais intra-bande LTE étant le premier nœud de relais, le premier nœud de relais comprenant une station de base de relais et un équipement utilisateur de relais, cette station de base de relais et cet équipement utilisateur de relais étant connectés en utilisant une interface de communication, l'équipement utilisateur de relais comprenant le module de réception (601), et la station de base de relais comprenant le module de planification (602).

11. Appareil selon la revendication 10, dans lequel l'équipement utilisateur de relais est configuré de façon à recevoir les informations d'attribution qui sont envoyées par le nœud B évolué donneur, et à envoyer ces informations d'attribution à la station de base de relais ; et dans lequel
la station de base de relais est configurée de façon à communiquer avec le premier équipement utilisateur pendant la période de planification en utilisant la deuxième ressource de support radio.
